# EUROPÄISCHE PATENTANMELDUNG

(11) **EP 2 453 387 A2**
(43) Veröffentlichungstag der Anmeldung: **16.05.2012**
(21) Anmeldenummer: 11184293.6
(22) Anmeldetag: 07.10.2011
(51) Int. Cl.: G06K 9/00

(54) **Fahrerassistenzsystem in einem Fahrzeug mit mehreren Kameras**

(30) Priorität: 12.11.2010 DE 102010043813
(71) Anmelder: Robert Bosch GmbH, 70442 Stuttgart (DE)
(72) Erfinder: Heger, Thomas, 71229 Leonberg (DE)

(57) **Zusammenfassung**

Die Erfindung betrifft Verfahren in einem Fahrerassistenzsystem (102) eines Fahrzeugs (100) mit mindestens einer ersten (104) und einer zweiten Kamera (106), sowie ein derartiges Fahrerassistenzsystem. Bei einem derartigen Verfahren erzeugt in jeder Kamera (104, 106) eine Abbildungskomponente Kamerarohdaten, aus denen durch eine Rohdatenverarbeitung Verarbeitungsdaten erzeugt werden, die mindestens einen Aspekt der Fahrzeugumgebung (105, 107) repräsentieren. Das Verfahren umfasst die folgenden Schritte: Erzeugen von Kamerarohdaten in der ersten Kamera (106); Übertragen der Daten an die zweite Kamera (104); Erzeugen von Verarbeitungsdaten aus den übertragenen Kamerarohdaten in der zweiten Kamera (104); und Bereitstellen der in der zweiten Kamera (104) erzeugten Verarbeitungsdaten für eine Ausgabekomponente (108) des Fahrerassistenzsystems (102).

## Beschreibung

### Stand der Technik

Die Erfindung betrifft Verfahren in einem Fahrerassistenzsystem eines Fahrzeugs mit mindestens einer ersten und einer zweiten Kamera, sowie ein derartiges Fahrerassistenzsystem.

Fahrerassistenzsysteme in Fahrzeugen umfassen beispielsweise Einparkassistenten, aber auch weitere Hilfssysteme wie etwa ABS (Antiblockiersystem), ESP (Elektronisches Stabilitätsprogramm), Abstandsregeltempomaten, usw. Für einige dieser Subsysteme sind Sensoren erforderlich, die eine Umgebung des Fahrzeugs erfassen. Derartige Sensoren umfassen häufig auch Kameras; beispielsweise kann eine Kamera zur Aufnahme von Bildern einer rückwärtigen Fahrzeugumgebung vorgesehen sein, wobei die Kamera beispielsweise beim Rückwärtseinparken dem Fahrer eine Ansicht der rückwärtigen Fahrzeugumgebung liefert und/oder eine Detektion von Objekten, d.h. potentiellen Hindernissen ermöglicht. Basierend auf diesem häufigen Einsatzzweck werden solche Kameras im folgenden verkürzend auch als "Rückfahrkameras" bezeichnet. Ebenso sind auch Systeme mit einer Kamera bekannt, die auf eine vorderseitige Fahrzeugumgebung ausgerichtet ist und beispielsweise zur Detektion von Objekten auf der sich vor dem Fahrzeug erstreckenden Fahrbahn und/oder zur Bestimmung eines Abstandes von derartigen Objekten vorgesehen ist.

Es sind auch Einparkassistenten mit mehreren Kameras bekannt. So beschreibt die GB 2459889 A ein derartiges System mit jeweils einer Mehrzahl von nach vorn und nach hinten gerichteten Kameras. Das System umfasst ferner einen Controller mit einem Videoprozessor, der die eingehenden Videodaten der Kameras verarbeitet. Befindet sich das Fahrzeug in Vorwärtsbewegung, werden auf einer Anzeige Bilder der Frontkameras ausgegeben. Bewegt sich das Fahrzeug rückwärts, werden von den rückwärtigen Kameras aufgenommene Bilder verarbeitet und ausgegeben.

Ein anderes System wird in der EP 1 655 970 A2 beschrieben. Hier verfügt jede Kamera über einen Imagetransmitter, der Imagedaten vor dem Versenden an einen Empfänger komprimiert. Der Empfänger erzeugt aus den empfangenen Daten Bilder, um diese dann einem Fahrer zur Anzeige zu bringen.

Basierend auf der Mehrzahl an Kameras ermöglichen diese bekannten Systeme komfortable Assistenzfunktionen; jedoch sind solche Systeme komplex und entsprechend kostspielig.

### Offenbarung der Erfindung

Es besteht Bedarf an einem Verfahren zum Betreiben eines Fahrerassistenzsystems mit mehreren Kameras, welches komfortable Assistenzfunktionen in kostengünstigerer Weise ermöglicht, sowie an einem derartigen Fahrerassistenzsystem.

Erfindungsgemäß wird ein Verfahren in einem Fahrerassistenzsystem eines Fahrzeugs mit einer ersten Kamera und einer zweiten Kamera vorgeschlagen. Jede der Kameras ist auf einen Bereich einer Fahrzeugumgebung ausgerichtet. In jeder Kamera erzeugt eine Abbildungskomponente Kamerarohdaten. Aus den Kamerarohdaten werden durch eine Rohdatenverarbeitung Verarbeitungsdaten erzeugt, die mindestens einen Aspekt der Fahrzeugumgebung repräsentieren, beispielsweise eine Ansicht der Fahrzeugumgebung und/oder ein Objekt in der Fahrzeugumgebung. Das Verfahren umfasst die folgenden Schritte: Erzeugen von Kamerarohdaten in der ersten Kamera; Übertragen der erzeugten Kamerarohdaten von der ersten Kamera an die zweite Kamera; Erzeugen von Verarbeitungsdaten aus den übertragenen Kamerarohdaten in der zweiten Kamera; und Bereitstellen der in der zweiten Kamera erzeugten Verarbeitungsdaten für eine Ausgabekomponente des Fahrerassistenzsystems.

Bei einer Ausführungsform kann die erste Kamera auf eine rückwärtige Fahrzeugumgebung und die zweite Kamera auf eine vorderseitige Fahrzeugumgebung ausgerichtet sein. Somit kann es sich insbesondere bei der ersten Kamera um eine Rückfahrkamera handeln. Bei den Kamerarohdaten kann es sich um eine elektrische bzw. elektronische (digitalisierte) Repräsentation optischer Signale handeln, die auf einem Aufnahmefeld der Abbildungskomponente auftreffen. Die Verarbeitung der Kamerarohdaten kann etwa eine Bildverarbeitung umfassen, bei der ein Datensatz erzeugt wird, der ein Bild der Fahrzeugumgebung repräsentiert, welches beispielsweise auf einer Anzeige eines HMI ("Human-Machine-Interface") des Fahrerassistenzsystems zur Anzeige gebracht werden kann.

Bei einer Ausführungsform des erfindungsgemäßen Verfahrens werden die Kamerarohdaten der ersten Kamera in Reaktion auf die Erfassung einer Rückwärtsfahrt des Fahrzeugs automatisch in der zweiten Kamera verarbeitet. Generell können die Kamerarohdaten vor der Übertragung an die zweite Kamera einer Datenkompression unterworfen werden. Bei diesen oder anderen Ausführungsformen des erfindungsgemäßen Verfahrens können die Kamerarohdaten über einen Datenbus an die zweite Kamera übertragen werden.

Die in der zweiten Kamera durchgeführte Bildverarbeitung kann alternativ oder zusätzlich zu einer Aufbereitung der Kamerarohdaten zur Darstellung eines Bildes auf einer Anzeigeeinheit eine Objektdetektion umfassen, die beispielsweise Grundlage einer Bestimmung von Hindernissen in der rückwärtigen Fahrzeugumgebung etwa bei einem Einparkvorgang bilden kann.

Bei bestimmten Ausführungsformen des erfindungsgemäßen Verfahrens erfolgt alternativ oder zusätzlich zu einer Ausgabe eines Bildes etwa auf einem Anzeigschirm eine Ausgabe auf eine akustische Ausgabeeinheit (z.B. Lautsprecher) des Fahrerassistenzsystems. Eine derartige Ausgabe kann beispielsweise auf einer Objektdetektion beruhen. So kann beispielsweise aus einer Bestimmung des "Optical Flows" der Abstand zu einem Hindernis bestimmt werden und eine entsprechende akustische Warnung ausgegeben werden.

Bei einigen Ausführungsformen des erfindungsgemäßen Verfahrens werden in der zweiten Kamera neben den Kamerarohdaten der ersten Kamera weitere Daten verarbeitet. Hierbei kann es sich beispielsweise um die Kamerarohdaten einer oder mehrerer weiterer Kameras handeln, die zur Erfassung der Fahrzeugumgebung vorgesehen sind. Bei diesen Kameras kann es sich um nach vorne, nach hinten oder zur Seite gerichtete Kameras handeln. Zusätzlich oder alternativ können auch beispielsweise die Daten eines Ultraschallsystems in der zweiten Kamera verarbeitet werden, sofern die Prozessorkapazität dieser Kamera hierfür entsprechend eingerichtet bzw. konfiguriert ist.

Erfindungsgemäß wird weiterhin folgendes vorgeschlagen: Ein Computerprogramm zur Durchführung eines der hierin beschriebenen Verfahren, wenn das Computerprogramm auf einer programmierbaren Computereinrichtung ausgeführt wird. Bei der Computereinrichtung kann es sich beispielsweise um ein Steuermodul eines Fahrerassistenzsystems handeln, wie etwa eine ECU ("Electronic Control Unit"). Das Computerprogramm kann weiterhin auch verteilt vorliegen, beispielsweise unter Einbeziehung der vorstehend skizzierten ersten und/oder zweiten Kamera des Fahrerassistenzsystems. Das Computerprogramm kann auf einem maschinenlesbaren Speichermedium gespeichert vorliegen, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung zum Herunterladen bereitgestellt werden, z. B. über ein Datennetzwerk wie das Internet oder eine Kommunikationsverbindung wie etwa eine Telefonleitung und/oder eine drahtlose Verbindung.

Erfindungsgemäß wird weiterhin ein Fahrerassistenzsystem mit einer ersten und einer zweiten Kamera vorgeschlagen. Jede der Kameras ist auf einen Bereich einer Fahrzeugumgebung ausgerichtet. In jeder Kamera ist eine Abbildungskomponente zur Erzeugung von Kamerarohdaten vorgesehen. Eine Rohdatenverarbeitungskomponente ist vorgesehen, um aus den Kamerarohdaten durch eine Rohdatenverarbeitung Verarbeitungsdaten zu erzeugen, die mindestens einen Aspekt der Fahrzeugumgebung repräsentieren. Das Fahrerassistenzsystem umfasst die folgenden Komponenten: Die Abbildungskomponente zum Erzeugen von Kamerarohdaten in der ersten Kamera; eine Komponente zum Übertragen der erzeugten Kamerarohdaten von der ersten Kamera an die zweite Kamera; die Rohdatenverarbeitungskomponente zum Erzeugen von Verarbeitungsdaten aus den übertragenen Kamerarohdaten in der zweiten Kamera; und eine Komponente zum Bereitstellen der in der zweiten Kamera erzeugten Verarbeitungsdaten für eine Ausgabekomponente des Fahrerassistenzsystems.

Die Rohdatenverarbeitungskomponente in der zweiten Kamera kann beispielsweise einen Videoprozessor umfassen. Der Videoprozessor kann insbesondere dazu ausgelegt sein, Kamerarohdaten von der zweiten und/oder der ersten Kamera zu verarbeiten.

Prinzipiell ist es auch denkbar, dass die erste Kamera für eine teilweise Rohdatenverarbeitung ausgebildet ist. So kann eine Rohdatenverarbeitungskomponente in der ersten Kamera nur für eine Bilddatenverarbeitung vorgesehen sein, während eine Rohdatenverarbeitungskomponente in der zweiten Kamera zusätzlich für eine Objektdetektion ausgebildet ist. Die Prinzipien der Erfindung sind auf eine derartige Konfiguration entsprechend anzuwenden.

### Vorteile der Erfindung

Die Erfindung ermöglicht die kostengünstigere Bereitstellung eines Fahrerassistenzsystems mit mehreren Kameras. Bei zwei oder mehr vorhandenen Kameras muss prinzipiell nur eine der Kameras mit einer Rohdatenverarbeitungskomponente ausgerüstet sein. Die anderen Kameras können eine einfachere Hardware-/Softwareausstattung aufweisen. Bei bisherigen Kamerasystemen, bei denen jede Kamera mit einer Rohdaten- bspw. Bildverarbeitungskomponente ausgerüstet ist, ist diese Komponente zwar vorhanden, wird aber oftmals nicht genutzt. Verfügt beispielsweise ein HMI eines Fahrerassistenzsystems über eine einzige Anzeigekomponente, bspw. ein Display, kann auf dieser Anzeige in der Regel zu jedem Zeitpunkt nur ein Bild einer der Kameras ausgegeben werden. Bei einem System mit zwei Kameras wird also beispielsweise eine Ansicht der vorderen Fahrzeugumgebung, oder aber eine Ansicht der Rückfahrkamera angezeigt, aber nicht beide.

Das bedeutet, dass in einem kamerabasierten Fahrerassistenzsystem prinzipiell nur so viele Rohdatenverarbeitungskomponenten (bspw. Videocontroller, Videoprozessoren) vorhanden sein müssen, wie Ausgabekomponenten (Displays, bzw. akustische Ausgabekomponenten wie Lautsprecher) vorgesehen sind. Eine Anzeige eines Bildes und eine akustische Ausgabe basierend auf einer Objektdetektion erfordern in diesem Sinne zwei Ausgabekomponenten, eine optische und eine akustische; jedoch ist auch hierfür ggf. nur ein entsprechend leistungsfähiger Prozessor in einer der Kameras notwendig.

Einige bekannte Systeme umfassen zusätzlich zu mehreren Kameras einen separaten Videoprozessor. Erfindungsgemäß entfällt jedoch eine derartige, die Komplexität erhöhende, zusätzliche Komponente. Somit kann ein kamerabasiertes Fahrerassistenzsystem beispielsweise eine einzige leistungsfähige Kamera mit integrierter Rohdatenverarbeitungskomponente aufweisen, während eine oder mehrere zusätzliche Kameras einfacher ausgestattet sind und insbesondere keine eigene Rohdatenverarbeitungskomponente benötigen, also z.B. keinen Videoprozessor. Bei diesen Kameras kann es sich beispielsweise um Kameras handeln, die nur gelegentlich genutzt werden, also bspw. um nur bei Rückwärtsfahrt genutzte Rückfahrkameras und/oder nach seitwärts gerichtete Kameras in den Seitenspiegeln, etc. Allerdings kann es sich durchaus auch zweckmäßig sein, eine seltener genutzte Kamera zur Verarbeitung von Rohdaten anderer Kameras vorzusehen, bspw. um eine Datenübertragung im Fahrzeugnetzwerk zu minimieren.

Für die Erfindung sollte in der Regel keine zusätzliche Verkabelung erforderlich sein, da keine zusätzliche Komponente benötigt wird. So müssen Kameras auch bisher schon an ein etwa vorhandenes Bussystem angeschlossen sein, damit etwa Bilder und sonstige Daten an ein HMI übertragen werden können. Das Bussystem bzw. Fahrzeugnetzwerk wird durch die Übertragung der Kamerarohdaten an die Kamera mit Rohdatenverarbeitungskomponente belastet. Jedoch kann etwa eine Datenkompression die Netzbelastung minimieren. Zusätzlich oder alternativ kann diejenige Kamera, die sich am nächsten zu einem HMI des Fahrerassistenzsystems befindet, als die Kamera mit der (gegebenenfalls einzigen) Rohdatenverarbeitungskomponente vorgesehen werden. Ist hierfür also beispielsweise eine Frontkamera vorgesehen, kann unter Umständen eine vom Netzwerk / Bussystem mindestens teilweise getrennte Datenverbindung zwischen dieser Kamera und dem HMI vorgesehen werden, so dass die Netzbelastung minimiert werden kann. Dies könnte beispielsweise für eine mit einem HMI in einem Gehäuse integrierte (Front-)Kamera der Fall sein.

Bei einem System mit einer Vielzahl von Kameras können zwei oder mehr dieser Kameras mit Rohdatenverarbeitungskomponenten ausgestattet sein, um auch so eine Belastung des Fahrzeugnetzwerks (Bussystem) zu minimieren.

### Kurze Beschreibung der Zeichnungen

Weitere Aspekte und Vorteile der Erfindung werden nunmehr anhand der beigefügten Figuren eingehender beschrieben. Hierbei zeigt:
- Fig. 1: in schematischer Übersichtsdarstellung ein Fahrzeug mit einem Ausführungsbeispiel eines erfindungsgemäßen Fahrerassistenzsystems mit zwei Kameras;
- Fig. 2: in Form eines schematischen Blockschaltbildes Komponenten des Fahrerassistenzsystems aus Fig. 1; und
- Fig. 3: in Form eines Flussdiagramms eine Arbeitsweise des Fahrerassistenzsystems aus Fig. 2.

### Ausführungsformen der Erfindung

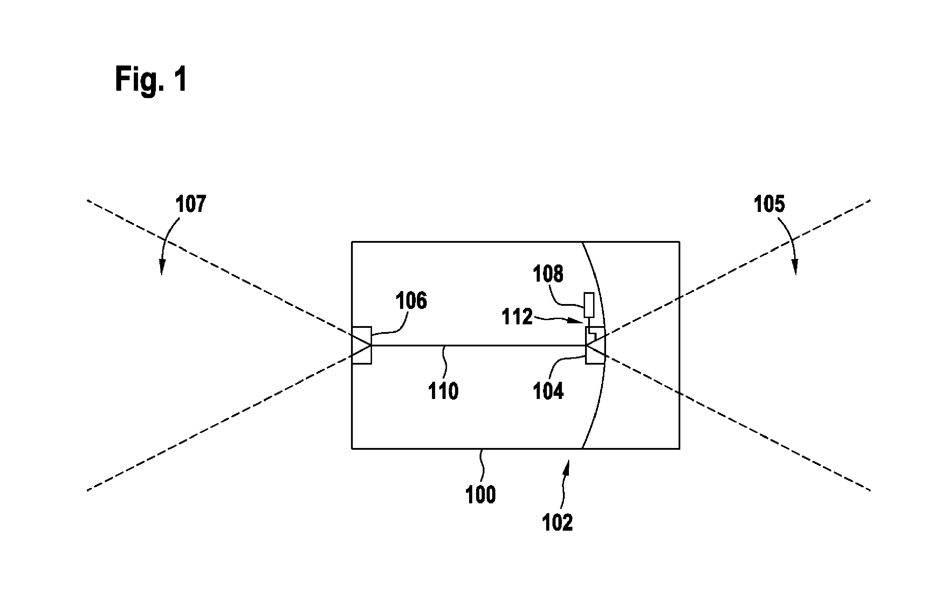

Fig. 1 zeigt in schematischer Form ein Fahrzeug 100 mit einem Ausführungsbeispiel 102 eines erfindungsgemäßen Fahrerassistenzsystems, von dessen Komponenten eine Frontkamera 104, eine Rückfahrkamera 106 und ein HMI 108 angedeutet sind. Die Frontkamera 104 ist auf einen Umgebungsbereich 105 vor dem Frontbereich des Fahrzeugs 100 ausgerichtet, die Rückfahrkamera 106 auf einen Umgebungsbereich 107 hinter dem Heck des Fahrzeugs 100.

Erfindungsgemäß werden Kamerarohdaten von der Rückfahrkamera 106 zur Frontkamera 104 übertragen, wozu eine Datenverbindung 110 vorgesehen ist, die beispielsweise über ein vorhandenes Fahrzeugnetzwerk realisiert werden kann. Bilddaten oder sonstige Verarbeitungsdaten der übertragenen Rohdaten werden dann von der Frontkamera 104 über eine weitere Datenverbindung 112 an das HMI 108 zur Ausgabe übermittelt, wobei die Datenverbindung 112 ebenfalls über ein existierendes Fahrzeugnetzwerk und/oder über eine zusätzliche Datenverbindung realisiert werden kann.

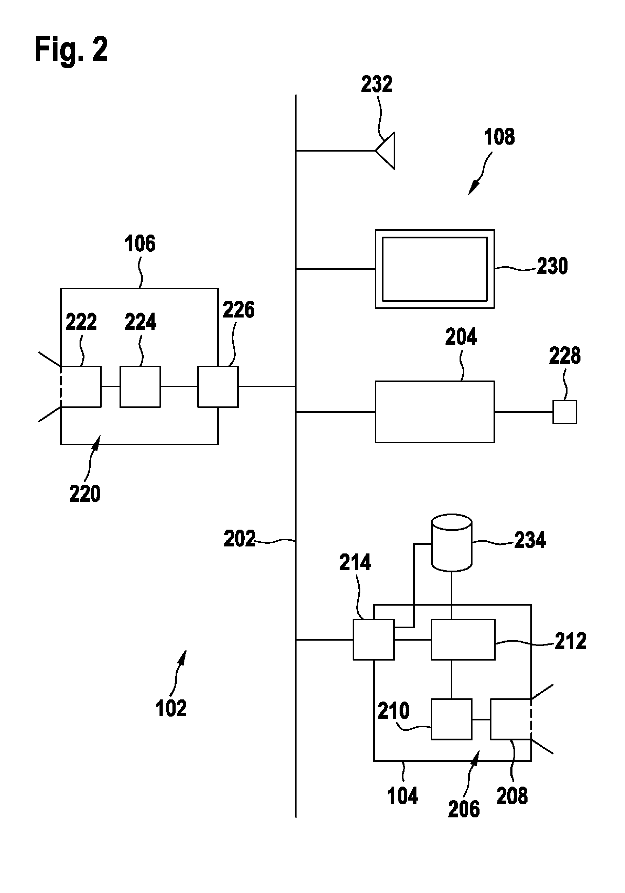

Fig. 2 zeigt in Form eines Blockschaltbildes funktionale Komponenten des Fahrerassistenzsystems 102 aus Fig. 1 mit weiteren Details. An ein Fahrzeugnetzwerk (Bussystem) 202 sind die folgenden Komponenten angeschlossen: Die Frontkamera 104, die Rückfahrkamera 106, das HMI 108 sowie eine ECU ("Electronic Control Unit") 204. Die Frontkamera 104 verfügt über eine Abbildungskomponente 206, die eine Kameraoptik 208 und eine A/D-Komponente 210 umfasst. Außerdem verfügt die Frontkamera 104 über eine Ausführungsform einer Rohdatenverarbeitungskomponente, nämlich eine Bildverarbeitungskomponente 212, sowie über eine Netzwerkschnittstelle 214. Die Rückfahrkamera 106 verfügt über eine Abbildungskomponente 220, die eine Kameraoptik 222 und eine A/D-Komponente 224 umfasst; außerdem hat die Rückfahrkamera 106 eine Netzwerkschnittstelle 226. An die ECU 204 ist eine Sensorik 228 angeschlossen, welche eine Rückwärtsfahrt des Fahrzeugs 100 (Fig. 1) erfasst. Das HMI 108 umfasst ein Display 230 zur optischen Anzeige von Bildern, die von den Kameras 104 bzw. 106 aufgenommen werden; sowie einen Lautsprecher 232 zur akustischen Ausgabe von Abstandsmeldungen bzw. -warnungen.

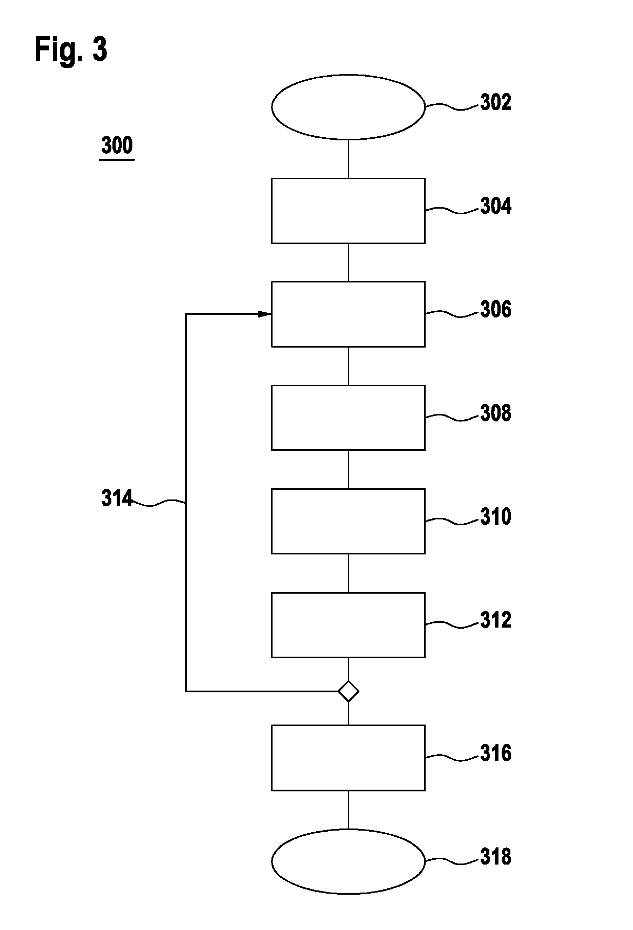

Eine Arbeitsweise des in der Fig. 2 dargestellten Fahrerassistenzsystems 102 wird nunmehr unter Bezug auf das Flussdiagramm in Fig. 3 genauer erläutert. Im Grundsatz beschreibt der Ablauf in Fig. 3 die Betriebsweise eines Fahrerassistenzsystems mit (mindestens) einer ersten Kamera und einer zweiten Kamera (302).

In Schritt 304 stellt die ECU 204 fest, basierend auf Daten der Sensorik 228, dass sich das Fahrzeug 100 in einer Rückwärtsfahrt befindet. Daraufhin übermittelt die ECU 204 über das Bussystem 202 des Fahrzeugs einen Aktivierungsbefehl an die Rückfahrkamera 106. Diese erzeugt daraufhin in Schritt 306 Kamerarohdaten. Dabei wird über die Kameraoptik 222 einfallendes Licht in elektrische Signale umgewandelt, wobei die A/D-Komponente 224 eine analoge Repräsentation des einfallenden Lichts digitalisiert; gegebenenfalls sind weitere, in Fig. 2 nicht gezeigte Einheiten der Abbildungskomponente 220 an der Erzeugung der Kamerarohdaten beteiligt. In Schritt 308 werden die so gewonnenen Kamerarohdaten über die Netzwerkschnittstelle 226, den Bus 202 und die Netzwerkschnittstelle 214 an die Frontkamera 104 übertragen.

Die Frontkamera 104 hat im Schritt 304 von der ECU 204 ebenfalls einen Befehl empfangen, der dazu führt, dass die Bildverarbeitungskomponente 212 keine Kamerarohdaten mehr von der Abbildungskomponente 206 (die im Übrigen ähnlich arbeiten kann, wie dies für die Abbildungskomponente 220 der Kamera 106 beschrieben wurde) entgegen, sondern empfängt Kamerarohdaten über die Netzwerkschnittstelle 214, d.h. von der ersten Kamera 106.

In Schritt 310 erzeugt die Bildverarbeitungskomponente 212 aus den über die Netzwerkschnittstelle 214 erhaltenen Kamerarohdaten Bilddaten. Die Bildverarbeitungskomponente 212 kann einen Videocontroller und/oder Videoprozessor umfassen, der beispielsweise zur Erzeugung von Frames bzw. Bildern aus den Kamerarohdaten der Komponenten 206 oder 220 für die Anzeige auf dem Display 230 ausgebildet ist.

In Schritt 312 werden die von der Bildverarbeitungskomponente 212 erzeugten Daten für das Display 230 des Fahrerassistenzsystems 102 bereitgestellt. Die Bereitstellung kann beispielsweise die Zwischenspeicherung in einem Buffer 234 betreffen, aus dem jeweils mindestens ein Frame über die Netzwerkschnittstelle 214 (oder eine eigene Netzwerkschnittstelle) und den Bus 202 zur Ausgabe an das Display 230 übertragen wird.

Neben der Bildverarbeitungskomponente 212 kann (als weiterer Teil einer umfassenden Rohdatenverarbeitungskomponente) eine weitere Komponente vorliegen (nicht separat gezeigt), die andere Rohdatenverarbeitungsfunktionen durchführt, und beispielsweise die Detektion von Objekten betrifft, welche ein potentielles Hindernis im Fahrschlauch darstellen könnten. Eine Ausgabe von hierauf basierender Verarbeitungsdaten kann ebenfalls über das HMI 108 erfolgen, bspw. in Form von akustischen (Warn-)Signalen über den Lautsprecher 232. Eine derartige Funktion kann bspw. beim Betrieb der Bildverarbeitungskomponente 212 zur Verarbeitung von Kamerarohdaten der Abbildungskomponente 206 der Frontkamera 104 deaktiviert sein (bspw. weil sich die Fahrzeugsituation von einem Vorwärtseinparken unterscheidet), während die Funktion automatisch aktiviert wird, sobald die Bildverarbeitungskomponente 212 Kamerarohdaten über den Bus 202 bzw. die Netzwerkschnittstelle 214 (von der Rückfahrkamera 106) empfängt.

Während beispielsweise einer Rückwärtsfahrt des Fahrzeugs 100 kann die Reihenfolge der Schritte 306-312 zyklisch durchlaufen werden, wie durch den Pfeil 314 in Fig. 3 angedeutet. Ist eine Rückwärtsfahrt beendet, kann die Rückfahrkamera 106 in Schritt 316 durch die ECU 204 deaktiviert und die Bildverarbeitungskomponente 212 in den "lokalen" Modus zurückversetzt werden, bei dem die Komponente 212 Kamerarohdaten der Abbildungskomponente 206 verarbeitet. In Schritt 318 endet das Verfahren, beispielsweise wird das Kamerasystem 106/104 nach erfolgreichem Ein- oder Ausparken deaktiviert.

Um eine Belastung des Bussystems 202 durch die von der Kamera 106 an die Kamera 104 zu übertragenen Kamerarohdaten (Schritt 308) zu minimieren, können die Kamerarohdaten vor der Übertragung komprimiert werden. Ein hardware- und/oder softwarebasiertes Kompressionsmodul kann beispielsweise in oder in Zuordnung zu der Netzwerkschnittstelle 226 der Kamera 106 vorgesehen sein; ein entsprechendes Dekompressionsmodul ist in oder in Zuordnung zu der Netzwerkschnittstelle 214 der Kamera 104 vorzusehen. Geeignete Datenkompressionsverfahren sind dem Fachmann bekannt, wobei ein geeignetes Datenkompressionsverfahren anhand der Art der Kamerarohdaten auszuwählen ist. Da es sich bei den zu übertragenden Daten um "Raw Data" und nicht um Bild- bzw. Frame- oder Imagedaten handelt, sind neben Verfahren wie beispielsweise MPEG-basierten Kompressionsverfahren auch andere Datenkompressionsverfahren in Betracht zu ziehen.

Während in dem oben diskutierten Ausführungsbeispiel das Fahrerassistenzsystem nur die beiden Kameras 104 und 106 umfasst, können in anderen Ausführungsbeispielen weitere Kameras vorgesehen sein. Bei einem konkreten Beispiel könnten etwa vier Kameras einen vorderen/seitlichen Fahrzeugumgebungsbereich abdecken, während vier weitere Kameras einen rückwärtigen Fahrzeugumgebungsbereich abdecken. Abhängig von der Ausgabekomponente oder den Ausgabekomponenten des Fahrzeugassistenzsystems sowie der Leistungsfähigkeit der verwendeten Rohdatenverarbeitungskomponente/n (bspw. Videocontroller bzw. -prozessor) kann eine einzige oder ein Subset der vorhandenen Kameras für die Bildverarbeitung vorgesehen sein, während die weiteren Kameras über keine eigene Rohdatenverarbeitungskomponente verfügen, oder nur eine Komponente mit beschränkter Leistungsfähigkeit. Die Kamerarohdaten dieser Kameras müssen gegebenenfalls an die Kamera oder eine ausgewählte derjenigen Kameras übermittelt werden, die über eine Rohdatenverarbeitungskomponente mit der gewünschten Verarbeitungsfähigkeit verfügt bzw. verfügen.

Welche der Kamera(s) mit einer Rohdatenverarbeitungskomponente ausgestattet sein soll, ist unter anderem anhand der Belastung des Fahrzeugnetzwerks auszuwählen, wie sie sich aus den gewünschten Anwendungsfällen ergibt. So wird eine Rückfahrkamera häufig bei niedrigen Fahrzeuggeschwindigkeiten zum Einsatz kommen, bei der Verzögerungen beim Transport anderer Daten über das Netzwerk eher toleriert werden können als bei hohen Geschwindigkeiten. Soll dennoch für diesen Fall oder für andere Anwendungen eine Netzlast minimiert werden, kann eine separate Datenverbindung etwa zwischen den Kameras vorgesehen werden, zwischen denen Kamerarohdaten zu übertragen sind, z.B. zwischen einer Mehrzahl an Kameras, die sich benachbart zueinander befinden, etwa in einer Stossstange integriert sind. Es kann also auch sinnvoll sein, eine Rückfahrkamera mit Rohdatenverarbeitungskomponente vorzusehen. Alternativ oder zusätzlich kann zwischen Kamera und HMI zur Übertragung der Verarbeitungsdaten eine separate Datenverbindung vorgesehen werden. Bei der in Fig. 1 gezeigten Konfiguration befindet sich beispielsweise die Kamera 104 mit Verarbeitungskomponente in der Nähe des HMI 108. Bei Integration in eine gemeinsame Baugruppe wäre das Vorsehen einer eigenen Datenverbindung mit geringen Zusatzkosten möglich, und der Fahrzeugbus würde nur minimal oder gar nicht belastet.

Die Erfindung ist nicht auf die hier beschriebenen Ausführungsbeispiele und die darin hervorgehobenen Aspekte beschränkt; vielmehr ist innerhalb des durch die anhängigen Ansprüche angegebenen Bereichs eine Vielzahl von Abwandlungen möglich, die im Rahmen fachmännischen Handelns liegen.

## Patentansprüche

1. Verfahren in einem Fahrerassistenzsystem (102) eines Fahrzeugs (100) mit einer ersten Kamera (106) und einer zweiten Kamera (104),
wobei jede der Kameras (104, 106) auf einen Bereich einer Fahrzeugumgebung (105, 107) ausgerichtet ist, und in jeder Kamera (104, 106) eine Abbildungskomponente (206, 220) Kamerarohdaten erzeugt;
wobei aus den Kamerarohdaten durch eine Rohdatenverarbeitung Verarbeitungsdaten erzeugt werden, die mindestens einen Aspekt der Fahrzeugumgebung repräsentieren;
und wobei das Verfahren die folgenden Schritte umfasst:
- Erzeugen (306) von Kamerarohdaten in der ersten Kamera (106);
- Übertragen (308) der erzeugten Kamerarohdaten von der ersten Kamera (106) an die zweite Kamera (104);
- Erzeugen (310) von Verarbeitungsdaten aus den übertragenen Kamerarohdaten in der zweiten Kamera (104); und
- Bereitstellen (312) der in der zweiten Kamera (104) erzeugten Verarbeitungsdaten für eine Ausgabekomponente (230, 232) des Fahrerassistenzsystems (102).

2. Verfahren nach Anspruch 1,
wobei die erste Kamera (106) auf eine rückwärtige Fahrzeugumgebung (107) und die zweite Kamera (104) auf eine vorderseitige Fahrzeugumgebung (105) ausgerichtet ist.

3. Verfahren nach Anspruch 2,
wobei die Kamerarohdaten der ersten Kamera (106) in Reaktion auf die Erfassung einer Rückwärtsfahrt des Fahrzeugs (100) automatisch in der zweiten Kamera (104) verarbeitet werden.

4. Verfahren nach einem der vorhergehenden Ansprüche,
wobei die Kamerarohdaten der ersten Kamera (106) vor der Übertragung an die zweite Kamera (104) einer Datenkompression unterworfen werden.

5. Verfahren nach einem der vorhergehenden Ansprüche,
wobei die in der zweiten Kamera (104) durchgeführte Rohdatenverarbeitung eine Objektdetektion umfasst.

6. Verfahren nach einem der vorhergehenden Ansprüche,
wobei die Kamerarohdaten über einen Datenbus (202) an die zweite Kamera (104) übertragen werden.

7. Verfahren nach einem der vorhergehenden Ansprüche,
wobei eine oder mehrere weitere Kameras zur Erfassung der Fahrzeugumgebung vorgesehen sind, deren Kamerarohdaten in der zweiten Kamera verarbeitet werden.

8. Computerprogramm zur Durchführung des Verfahrens nach einem der vorhergehenden Ansprüche, wenn das Computerprogramm auf einer programmierbaren Computereinrichtung ausgeführt wird.

9. Fahrerassistenzsystem (102) eines Fahrzeugs (100) mit einer ersten Kamera (106) und einer zweiten Kamera (104),
wobei jede der Kameras (104, 106) auf einen Bereich einer Fahrzeugumgebung (105, 107) ausgerichtet ist, und in jeder Kamera (104, 106) eine Abbildungskomponente (206, 220) zur Erzeugung von Kamerarohdaten vorgesehen ist;
wobei eine Rohdatenverarbeitungskomponente (212) vorgesehen ist, um aus den Kamerarohdaten durch eine Rohdatenverarbeitung Verarbeitungsdaten zu erzeugen, die mindestens einen Aspekt der Fahrzeugumgebung repräsentieren;
und wobei das Fahrerassistenzsystem (102) die folgenden Komponenten umfasst:
- die Abbildungskomponente (220) zum Erzeugen von Kamerarohdaten in der ersten Kamera (106);
- eine Komponente (226, 202, 214) zum Übertragen der erzeugten Kamerarohdaten von der ersten Kamera (106) an die zweite Kamera (104);
- die Rohdatenverarbeitungskomponente (212) zum Erzeugen von Verarbeitungsdaten aus den übertragenen Kamerarohdaten in der zweiten Kamera (104); und
- eine Komponente (234) zum Bereitstellen der in der zweiten Kamera (104) erzeugten Verarbeitungsdaten für eine Ausgabekomponente (230, 232) des Fahrerassistenzsystems (102).

10. Fahrerassistenzsystem nach Anspruch 9,
wobei die Rohdatenverarbeitungskomponente (212) in der zweiten Kamera (104) einen Videoprozessor umfasst.
